Europäisches Patentamt

**European Patent Office**

**Office européen des brevets**

(19)

(11) Publication number: **0 206 991**
A2

(12) # EUROPEAN PATENT APPLICATION

(21) Application number: **86810251.8**

(22) Date of filing: **09.06.86**

(51) Int. Cl.⁴: **A 23 G 3/30**

(30) Priority: **12.06.85 US 743856**

(43) Date of publication of application: **30.12.86**
**Bulletin 86/52**

(84) Designated Contracting States: **BE CH DE FR GB LI SE**

(71) Applicant: **WARNER-LAMBERT COMPANY, 201 Tabor Road, Morris Plains New Jersey 07950 (US)**

(72) Inventor: **Graff, Allan H., 8 Blue Fern Lane, Randolph N.J. 07869 (US)**
Inventor: **Huzinec, Robert, 120 Kenvil Avenue, Kenvil N.J. 07847 (US)**

(74) Representative: **Silbiger, Jakob, Dr., c/o Capsugel AG Engelgasse 11, CH-4010 Basel (CH)**

(54) **Monofluorophosphate containing chewing gum composition.**

(57) A chewing gum composition having enhanced fluoride release containing a chewing gum base, a monofluorophosphate, a sweetner and a flavoring agent.

EP 0 206 991 A2

## MONOFLUOROPHOSPHATE CONTAINING CHEWING GUM COMPOSITION

The present invention relates to compositions for introducing controlled amounts of fluoride compounds into the oral cavity and the circulatory system. The composition of the present invention is an enhanced fluoride releasing chewing gum containing a monofluorophosphate compound.

The use of fluoride for the prevention of dental caries is well known. Fluoride has been shown to prevent tooth decay through two therapeutic pathways. In the first pathway, fluoride acts to strengthen the mineral structure of teeth during their formation. The presence of fluoride reinforces mineral structure by forming fluor-apatite and by causing the calcium phosphates of the teeth to take their most stable crystalline form as hydroxyapatites. The modified mineral structure produced by the presence of fluoride leaves the tooth surface more resistant to cariogenic acid. In the second therapeutic pathway, fluoride is administered locally to the oral cavity. When administered locally, fluoride comes in contact with dental plaque which forms at the base of the teeth adjacent to the gums. Fluoride very strongly in-inhibits the growth and metabolism of the acid producing organisms found in dental plaque. Fluoride further acts as a blocking agent for cariogenic acid producing enzymes present in dental plaque. It is this reduction in the total amount of acid present in the dental plaque which is responsible for the anti-cariogenic activity of fluoride applied locally.

The optimum fluoride treatment would both supply fluoride locally to the oral cavity as well as internally in the gastrointestinal tract for absorption. A fluoride containing chewing gum would provide prolonged exposure of dental plaque to fluoride during mastication. Fluoride would also enter the gastrointestinal tract as saliva containing fluoride is swallowed.

The addition of fluoride to chewing gum compositions is well known. Fluoride does not, however, chew out of chewing gum satisfactorily. It is generally believed that fluoride forms insoluble compounds with the components of gum base thus preventing the release of fluoride into the oral cavity.

In U.S. patents 2,627,493 and 2,700,012, Merckel, et al. overcame the interaction of sodium fluoride with calcium compounds in gum base. In the '493 patent this was accomplished by dissolving out the calcium compound by means of a strong acid and then washing out the resulting salt. In the '012 patent, the calcium was rendered nonreactive by prereacting it with oxalate, phosphate or the like to form insoluble compounds.

In U.S. patent 4,265,877, Tenta discloses the use of a combination of sodium fluoride and calcium carbonate derived from oyster shell in a chewing gum base as a longer-lasting, faster acting agent for introducing fluoride ions into the metabolism of bone and dentition. The oyster shell employed consisted of about 97% calcium carbonate and 3% of a mixture of trace elements. It is believed that these trace elements substantially enhance the absorption characteristics of fluoride from the Tenta composition.

0206991

In U.S. patent 4,284,650, Goupil discloses a gum base free of any alkaline-earths, mainly the calcium ion, in order to avoid precipitation of the fluoride ion in the state of an insoluble and therefore inactive salt. The source of fluoride ion in the gum base is sodium fluoride.

In U.S. patent 4,419,346, Storz, et al discloses a method and composition for treating teeth to reduce dental caries wherein the teeth are contacted with a synergistic combination of a saccharin material, and a fluoride material. The combination of saccharin material and fluoride material may be contained in a chewing gum composition and is present in an amount sufficient to inhibit growth of Streptococcus mutans in the presence of fermentable carboyhydrates.

Storz, et al. makes an incidental disclosure of fluoride material and similar terms to include the readily available soluble fluoride salts, such as sodium fluoride, potassium fluoride, ammonium fluoride, stannous fluoride and the like or the relatively insoluble forms of fluoride such as calcium fluoride, strontium fluoride and monofluorophosphate.

In U.S. patent 4,474,749, Kruppa discloses encasing sodium fluoride in Zein G-200. By encasing the sodium fluoride it is prevented from interacting and forming insoluble products with other gum components. Zein G-200 is a copolymer of amino acids with a molecular weight of approximately 25,000 which is soluble in alcohol, glycols, glycol ethers and in alkalies but not water.

While the prior art compositions are effective fluoride releasing products, the manufacture of these products requires special procedures, special ingredients or both.

The instant invention concerns a novel fluoride containing chewing gum composition having a fast and substantially complete release of fluoride.

In accordance with the present invention, a chewing gum composition is prepared that contains a chewing gum base having incorporated therein a sweetener, flavoring agent and a monoflurophosphate compound.

In particular, it has been found that an enhanced fluoride releasing anticariogenic chewing gum is produced from an admixture of a chewing gum base and a monofluorophosphate compound.

While the invention is not limited to theoretical considerations, it is believed that the rapid release of fluoride from the chewing gum composition upon mastication is a result of the structure and solubility of monofluorophosphate. In the chewing gum composition, the fluorine atom of monoflurophosphate is bound to the phosphate. By being bound the fluoride is not available to interact with other chewing gum components. Upon mastication, the monofluorophosphate dissolves in saliva and is carried into the oral cavity. Once in the aqueous environment of the mouth the monofluorophosphate hydrolyzes releasing fluoride ion. Mono-fluorophosphates not hydrolyzed in the oral cavity will be rapidly hydrolyzed in the stomach acids after ingestion.

Accordingly, an enhanced fluoride releasing anticariogenic chewing gum composition comprising monofluorophosphate and a chewing gum formulation has been discovered.

In the instant invention, the monofluorophosphate can be any water soluble form of monofluorophosphate such as monofluorophosphoric acid, and the salts of monofluorophosphoric acid such as ammonium, lithium, sodium, potassium, calcium, zinc, iron and mixtures thereof. In a preferred embodiment the monofluorophosphate is sodium monofluorophophate.

The monofluorophosphate is present in an amount so as to provide from about 20 ppm to about 1,000 ppm fluoride per unit dose. One piece of gum is equivalent to one unit dose weighing about 3 grams. In a preferred embodiment, the monofluorophosphate is present in an amount so as to provide from about 20 ppm to about 500 ppm fluoride per unit dose and more preferably from about 50 ppm to about 200 ppm per unit dose.

In a preferred embodiment, the amount of monofluorophosphate ($PO_3F^{2-}$) is from about 0.0103 to about 0.516% by weight. In a more preferred embodiment, the amount of monofluorophosphate is from about 0.0103 to about 0.258% by weight and most preferably from about 0.0258 to about 0.103% by weight.

In a preferred embodiment, the monofluorophosphate is sodium monofluorophosphate. The amounts of sodium monofluorophosphate in a preferred embodiment are from about 0.0151 to about 0.758% by weight. In a more preferred embodiment, the amount of sodium monofluorophosphate is from about 0.0151 to about 0.379% by weight and most preferably from about 0.0379 to about 0.152% by weight.

The monofluorophosphate can be incorporated into sugar or sugarless chewing gum combinations which can be made into a variety of products, e.g. stick, slab, chunk and tablet gum products.

The chewing gum compositions of the instant invention contain a gum base. The amount of gum base employed will vary greatly depending on various factors such as the type of base used, consistency desired and other components used to make the final product. In general, amounts of about 5% to about 45% by weight of the final chewing gum composition are acceptable for use in chewing gum compositions with preferred amounts of about 15% to about 25% by weight. The gum base used in this invention may be any water-insoluble gum base well known in the art. Illustrative examples of suitable polymers in gum bases include both natural and synthetic elastomers and rubbers. For example, those polymers which are suitable in gum bases, include, without limitation, substances of vegetable origin such as chicle, jelutong, gutta percha, guayle and crown gum. Synthetic elastomers such as butadiene-styrene, copolymers, isobutylene-isoprene copolymers, polyethylene, polyisobutylene and polyvinylacetate and mixtures thereof, are particularly useful.

The gum base composition may contain elastomer solvents to aid in softening the rubber component. Such elastomer solvents may comprise methyl, glycerol or pentaerythritol esters of rosins or modified rosins, such as hydrogenated, dimerized or polymerized rosins or mixtures thereof. Examples of elastomer solvents suitable for use herein include pentaerythritol ester of partially hydrogenated wood rosin, pentaerythritol ester of wood rosin, glycerol ester of partially dimerized rosin, glycerol ester of polymerized rosin, glycerol ester of tall oil rosin, glycerol ester of wood rosin, and partially hydrogenated wood rosin, and partially hydrogenated methyl ester of rosin and mixtures thereof. The solvent may be employed in an amount ranging from about 10% to about 75% and preferably about 45% to about 70% by weight of the gum base.

A variety of traditional ingredients used as plasticizers or softeners such as lanolin, stearic acid , sodium sterate, potassium sterate, glyceryl triacetate, triacetin, glycerine and the like, may also be incorporated into the gum base to obtain a variety of desirable textures and consistency properties. These additional materials are generally employed in amounts of up to about 30% by weight and preferably in amounts of from about 3% to about 7% by weight of the final gum base composition.

The chewing gum compositions employing the instant gum bases generally contain sweetening agents. The sweetening agent may be selected from a wide range of materials including water-soluble agents, water-soluble artificial sweeteners, and dipeptide based sweeteners, including mixtures thereof. Without being limited to particular sweeteners, representative illustrations encompass:

A. Water-soluble sweetening agents such as monosaccharides, disaccharides, and polysaccharides such as xylose, ribose, glucose, mannose, galactose, fructose, dextrose, sucrose, sugar, maltose, partially hydrolyzed starch or corn syrup solids and sugar alcohols such as sorbitol, xylitol, mannitol and mixtures thereof.

B. Water-soluble artificial sweeteners such as the soluble saccharine salts, i.e., sodium or calcium saccharin salts, cyclamate salts, acesulfame-K and the like, and the free acid form of saccharin.

C. Dipeptide based sweeteners such as L-aspartyl-L-phenylalanine methyl ester and material described in U.S. Pat. No. 3,492,131 and the like.

In general, the amount of sweetener will vary with the desired amount of sweeteners selected for a particular chewing gum composition. This amount will normally be 0.01% to about 90% by weight when using an easily extractable sweetener. The water-soluble sweeteners described in category A above, are preferably used in amounts of about 25% to about 75% by weight, and most preferably from about 50% to about 65% by weight of the final chewing gum composition. In contrast, the artificial sweeteners described in categories B and C are used in amounts of about 0.005% to about 5.0% and most preferably about 0.05% to about 2.5% by weight of the final chewing gum composition. These amounts are ordinarily necessary to achieve a desired level of sweetness independent from the flavor level achieved from flavor oils.

The chewing gum composition of this invention may additionally include the conventional additives of coloring agents such as titanium dixoide; emulsifiers such as lecithin and glyceryl monostearate; and fillers such as dicalcium phosphate, aluminum hydroxide, alumina, aluminum silicates, talc, calcium carbonate, and combinations thereof. The total amount of fillers present is generally between 4% and 30% by weight. Flavoring agents well known to the chewing gum art may be added to the chewing gum compositions of the instant invention. These flavoring agents may be chosen from synthetic flavor oils and/or oils derived from plants, leaves, flowers, fruits and so forth, and combinations thereof. Representative

0206991

flavor oils include: spearmint oil, cinnamon oil, oil of wintergreen (methylsalicylate) and peppermint oils. Also useful are artificial, natural or synthetic fruit flavors such as citrus oil including lemon, orange, grape, lime and grapefruit, and fruit essences including apple, strawberry, cherry, pineapple and so forth.

The amount of flavoring agent employed is normally a matter of preference subject to such factors as flavor type, base type and strength desired. In general, amounts of about 0.05% to about 3.0% by weight of the final chewing gum composition are useable with amounts of about 0.3% to about 1.5% being preferred and about 0.7% to about 1.2% being most preferred.

The method for producing the monofluorophosphate containing chewing gum of the invention includes admixing filler, sweetener, emulsifier and softener to a melted gum base to form a uniform mixture, admixing monofluorophosphate to the mixture, admixing flavor to the mixture to form the product, recovering said product and shaping the product as desired.

An illustrative process involves melting the gum base at a temperature of about $70^{\circ}$C to about $120^{\circ}$C. To the melted gum base, the filler, sweetener, emulsifier and softener are gradually added with continued mixing over a period of about 15 minutes. The monofluorophosphate is then added with continued mixing for about 5 minutes.

The following examples serve to provide further appreciation of the invention but are not meant in any way to restrict the effective scope of the invention. All percentages throughout the specification are by weight % of the final composition unless otherwise indicated.

## EXAMPLE I

### Inventive Run A and Comparative Run 1

The following ingredients were admixed in accordance with the procedure listed below.

| Ingredient | % by weight of chewing gum composition | |
|---|---|---|
| | Inventive Run A | Comparative Run 1 |
| Gum base | 24.00 | 24.00 |
| Talc (Filler) | 6.00 | 6.00 |
| Calcium Carbonate (Filler) | ----- | ----- |
| Saccharin | 0.085 | 0.085 |
| Sorbitol | 63.87 | 63.87 |
| Glycerin | 4.24 | 4.22 |
| Flavor | 1.50 | 1.50 |
| Lecithin | 0.3 | 0.3 |
| Sodium Monofluorophosphate* (MFP) | 0.0632 | ----- |
| Sodium Fluoride** (NaF) | ---- | 0.01834 |

\* 0.0632% MFP is equivalent to 0.00836% Fluoride ion.
\*\*0.01834% NaF is equivalent to 0.00835% Fluoride ion.

### Process for Inventive Run A.

Heat the gum base to about 95°C. Admix the talc, sorbitol and glycerin with the gum base to form a uniform mixture. With continued mixing add the saccharin, the flavor, lecithin, and the sodium monofluorophosphate to form a uniform mixture. Recover the product and form it into sticks of chewing gum weighing about 3 grams each.

### Process for Comparative Run 1.

Follow the same procedure as in Inventive Run A replacing sodium monoflurophosphate with sodium fluoride.

## EXAMPLE II

### Inventive Runs B and C

The following ingredients were admixed in accordance with the procedure listed below.

| Ingredient | % by weight of chewing gum composition | |
|---|---|---|
| | Inventive Run B | Inventive Run C |
| Gum base | 24.00 | 24.00 |
| Talc (Filler) | . 6.00 | ----- |
| Calcium Carbonate (filler) | ----- | 6.00 |
| Sorbitol | 64.12 | 64.12 |
| Saccharin | 0.085 | 0.085 |
| Gylcerin | 4.23 | 4.23 |
| Flavor | 1.50 | 1.50 |
| Sodium Mono-fluorophosphate* (MFP) | 0.063 | 0.063 |

* 0.063% MFP is equivalent to 0.00836% Fluoride ion.

Heat the gum base to about 95°C. Admix the talc or calcium carbonate, sorbitol and glycerin with the gum base to form a uniform mixture. With continued mixing add the saccharin, the flavor and the sodium monofluorophosphate to form a uniform mixture. Recover the product and form it into sticks of chewing gum weighing about 3 grams each.

<u>EXAMPLE III</u>

Fluoride Chewout of Inventive Runs A, B and C,
and Comparative Run 1

This example demonstrates the fluoride chewout
of the Inventive Runs of Examples I and II and the
Comparative Run of Example I.

| <u>Composition</u> | <u>Percent Chewout</u> |
|---|---|
| <u>Comparative</u> | |
| 1   Talc Filler | 0.00 |
| <u>Inventive</u> | |
| A   Talc Filler | 85.46 |
| B   Talc Filler | 90.21 |
| C   Calcium Carbonate Filler | 89.43 |

<u>Chewout Procedure</u>:

Preweigh each stick of gum and place it into a
glassine envelope. The panelist removes the gum
from the glassine envelope and chews it for 20
minutes. The bolus of masticated gum is placed back
into the glassine envelope and returned for chemical
analysis of residual fluoride. Each evaluation
panel consists of 6 to 10 panelists.

The results clearly demonstrate the superior
chewout of fluoride for chewing gums prepared with
sodium monofluorophosphate as compared to chewing
gums prepared with sodium fluoride. The results
further demonstrate that the presence of calcium
carbonate instead of talc in the chewing gum has no
effect on fluoride chewout.

The invention being thus described, it will be
obvious that the same may be varied in many ways.
Such variations are not to be regarded as a
departure from the spirit or scope of the invention
and all such modifications are intended to be
included within the scope of the claims.

0206991

What is claimed is:

1. An enhanced fluoride releasing chewing gum composition comprising a chewing gum base and a monofluorophosphate compound.

2. The composition of claim 1 wherein the monofluorophosphate compound is present in an amount from about 0.0151 to about 0.758% by weight.

3. The composition of claim 2 wherein the monofluorophosphate compound is selected from the group consisting of the ammonium, lithium, sodium, potassium, calcium, zinc and iron salts of monofluorophosphate, monofluorophosphoric acid and mixtures thereof.

4. The composition of claim 3 wherein the mono-fluorophosphate compound is sodium monofluorophosphate.

5. The composition of claim 2 in unit dosage form, each unit dosage including from about 0.0103 to about 0.516% by weight of monofluorophosphate compound.

6. The composition of claim 5 wherein said unit dosage form is a stick of gum weighing about 3 grams.

7. A composition according to claim 1 which further comprises sweetening agents, flavoring agents and colorants.

8. An enhanced fluoride releasing chewing gum composition comprising a chewing gum base and sodium monofluorophosphate compound in an amount from about 0.0151 to about 0.758% by weight.

9. A method for producing a monofluorophosphate containing chewing gum which comprises: admixing filler, sweetener, emulsifier and softener to a melted gum base to form a uniform mixture, admixing monofluorophosphate to the mixture and admixing flavor to the mixture to form the product, recovering said product,and shaping the product as desired.